# EUROPEAN PATENT SPECIFICATION

(11) **EP 0 481 508 B1**
(45) Date of publication and mention of the grant of the patent: **09.04.1997**
(21) Application number: 91117817.6
(22) Date of filing: 18.10.1991
(51) Int. Cl.: G06F 11/14

(54) **Back-up/restore information processing system**
Informationsverarbeitungsvorrichtung für die Sicherung und Wiederherstellung von Daten
Dispositif de sauvegarde et de rétablissement de données

(30) Priority: 18.10.1990 JP 279804/90; 30.11.1990 JP 335730/90
(43) Date of publication of application: 22.04.1992
(73) Proprietor: SEIKO EPSON CORPORATION, Shinjuku-ku Tokyo 163-08 (JP)
(72) Inventor: Ushiyama, Yuichi, c/o Seiko Epson Corporation, Shiojiri-shi, Nagano-ken, 399-07 (JP)
(74) Representative: Lehn, Werner, Dipl.-Ing.

(56) References cited:
- EP-A- 0 230 351
- EP-A- 0 365 128
- EP-A- 0 391 543
- US-A- 5 146 459
- RESEARCH DISCLOSURE no. 306, October 1989, New York, USA, p. 727, XP000085420, 'Audible Tone Indication of Execution Status'
- ELECTRONIC ENGINEERING vol. 62, no. 763, July 1990, Woolwich, London, GB, pp. 43-46, XP000138234, M. GABLE

## Description

### Background of the Invention

### (Field of the Invention)

The present invention relates to a data back-up/restore system of an information processing apparatus according to the preamble of claim 1. A system of this kind is known from EP-A-0 230 351.

### (Related Background Art)

Some of recent portable or transportable information processing apparatus such as personal computers and personal word processors have an internal data preserve function which preserves a status at the time of power-off and restores the preserved status when the power is next turned on to continue the data processing. In this function, all status at the time of the power-off including the displayed content are stored in a memory when the operation status of the information processing apparatus is displayed on a display screen and when the power is turned on again, the information processing apparatus can resume with the same status as that at the time of the power-off. When such a mechanism is operated, an operator notices the power-off because a brightness of the display or a back light is darkened when a power switch is turned off during the operation of the information processing apparatus. However, in actual, data is being moved to the memory in the information processing apparatus to back up the data. When all processing are completed after a predetermined time period, a portion or all of the power supply circuit are turned off. When the power switch is turned on from the turn-off state, the operator notices it because the display is brightened. However, in the processing unit, the backed-up data is being moved to the memory of the processing apparatus or the display and the processing apparatus does not work even if the operator depresses a key of a keyboard. That is, the completion of restore of the preserved status delays from the timing of the power-on when such a function is installed, and there is no means to clearly determine when the restore of the preserved status has completed.

Further, the movement of the back-up data to the processing apparatus when the power is turned on may not be normally performed. In such a case, the processing apparatus does not work even if a key of the keyboard is depressed, or even if it works, the execution gradually becomes out of order.

From electronic engineering volume 62, number 763, July 1990, Woolwich, London GB, pages 43 to 46 a suspend and resume conversation mode for Laptop computers is known. In the suspend state various clock frequencies are lowered in order to save power.

### Summary of the Invention

It is an object of the present invention to improve the reliability of data restoration in an information processing apparatus equipped with a data back-up/restore system after turning on the power.

This object is solved as defined in claim 1.

The present invention provides a data back-up/restore system of an information processing apparatus comprising memory means connected to control means through a bus line; status back-up means for backing up the status of said control means and the content of the memory means at the time of power-off; and status restore means for restoring the status backed up by the status back-up means at the time of power-on to resume the data processing; wherein the system performs backing up first environmental status configuration at the time of pwoer-off into the status back-up means; and comparing the first environmental status configuration at the time of power-off backed up by the status back-up means with the second environmental status configuration when the power in turned on; and permitting the use the apparatus by a user when the first environmental status configuration is identical to the second environmental status configuration. The first environmental status configuration may include information derived by error detection process to the data pressured in the memory, connection status information of external memories or I/O port information.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art form this detailed description.

### Brief Description of the Drawings

Figs. 1A, 1B and 1C show a configuration of one embodiment of the present invention;
Fig. 1D shows the constructive relationship between Figs. 1A, 1B and 1C;
Fig. 2 shows a flow chart of an operation of the embodiment,
Fig. 3A, 3B, 3C and 3D show flow charts of a data back-up/restore system of the embodiment,
Fig. 4A, 4B, 4C and 4D show flow charts of the data back-up/restore system of the embodiment,
Fig. 5A and 5B show flow charts of the data back-up/restore system of the embodiment, and
Fig. 6 shows a conceptual view of the back-up to a back-up memory.

### Description of the Preferred Embodiments

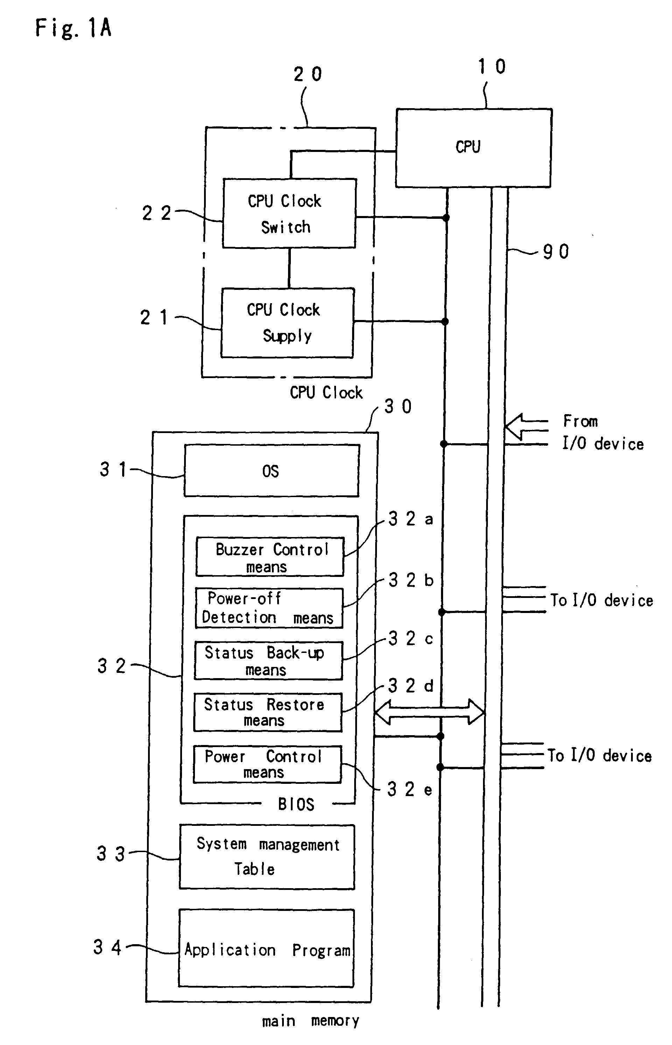

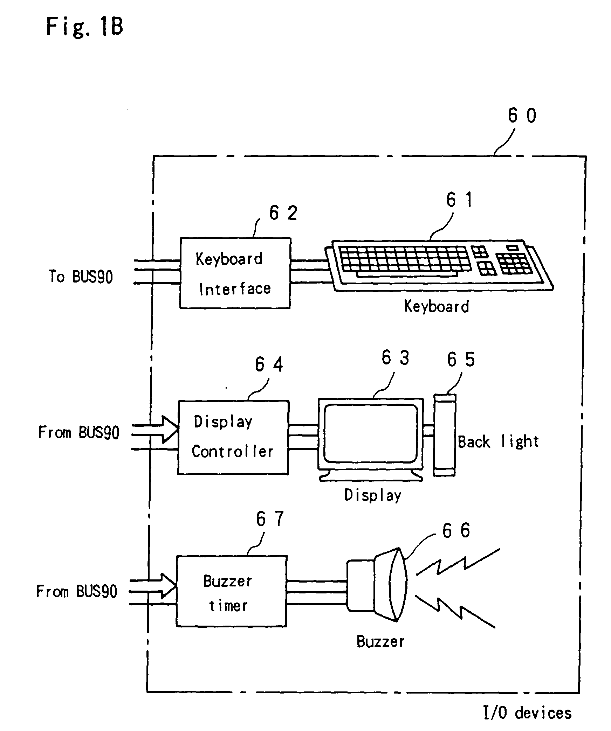

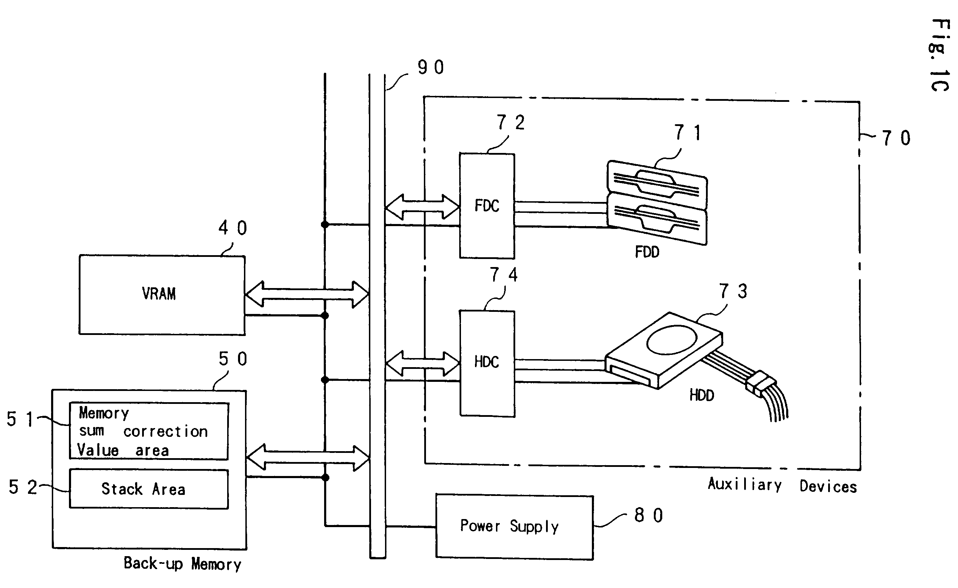

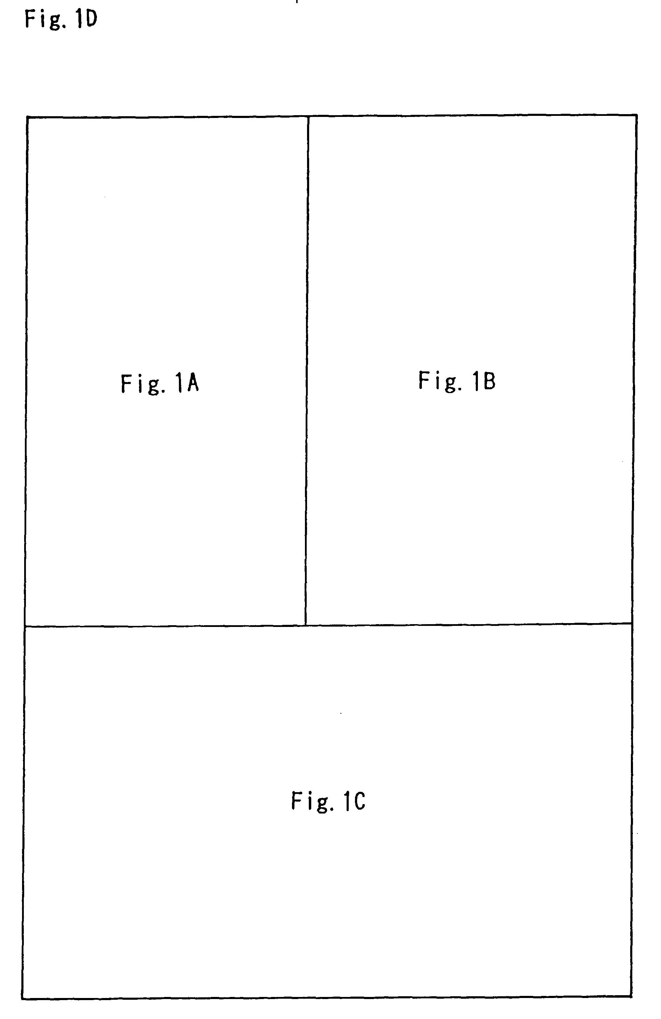

One embodiment of the present invention is now explained with reference to Figs. 1 to 6.

Figs. 1A, 1B and 1C show a configuration of an information processing apparatus of the present invention. The information processing apparatus comprises a CPU 10 which is control means, a CPU clock 20 for clocking the CPU 10 a main memory 30 for storing programs and data, a VRAM 40 for storing image data and permitting high speed access, a back-up memory 50 which preserves data when a system power is turned off, an input/output device 60 for controlling input/output, an auxiliary memory 70 for storing data and a power supply 80 for supplying powers to the respective units from a home power line or a battery. The CPU clock 20 includes a CPU clock supply 21 for generating a reference clock signal and a CPU clock-switch 22 for switching from the reference clock signal to a desired clock signal. The main memory 30 includes an OS (operating system) 31, a BIOS (basic input/output system) 32, a system management table 33 which manages connection status information of the auxiliary memory 70 and application programs 34. The BIOS 32 includes buzzer control means 32a power-off detection means 32b, status back-up means 32c, status restore means 32d and power control means 32e. The back-up memory 50 includes a memory sum correction value area 51 and a stock area 52. The input/output device 60 includes a keyboard 61, a keyboard interface 62, a display 63, a display controller 64, a back light 65 for illuminating the display 63, a buzzer 66 controlled by the buzzer control means 32a and a buzzer timer 67. The buzzer timer 67 is used to determine a frequency of the buzzer sound of the buzzer 66. The auxiliary memory 70 includes a floppy disk drive 71, a FDC (floppy disk controller) 72, a hard disk drive 73 and HDC (hard disk controller) 74. In the present embodiment, the CPU 10 gives instructions to the respective units through the bus line 90 along the processing of the BIOS 32 to attain the resume function. A small power is supplied to the main memory 30 and the back-up memory 50 after the power-off of the system power so that the data stored in those memories are preserved even after the power-off of the system power. Accordingly, the data which should be backed up at the power-off in order to attain the resume function in the back up memory 50 is the image data, and the data stored in the main memory is not backed up. The system environmental status configuration which is a feature of the present embodiment is also backed up to the back-up memory 50 at this stage.

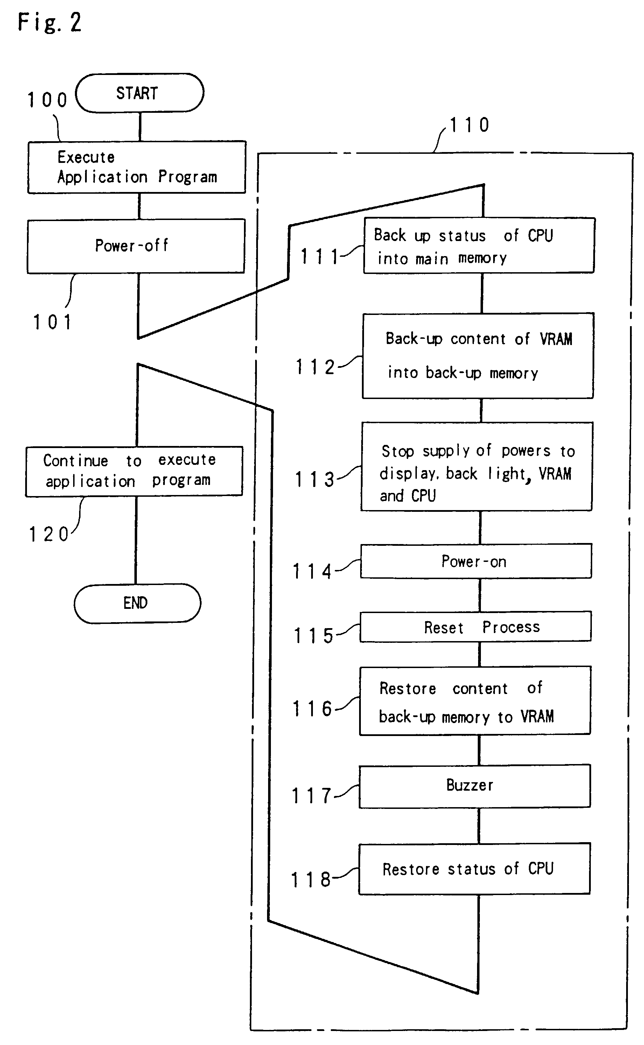

Referring to a flow chart of Fig. 2, an operation from the power-off to the power-on and the information of the resumption of the data processing through the inform means is explained. When the power switch is tuned off (step 101) during the execution of the application program 34 (step 100), a power-off detection interruption signal 110 is generated and the control is shifted to a power-off process. The status of the CPU 10 is backed up in the main memory 30 (step 111) and the content of the VRAM 40 is backed up in the back-up memory 50 (step 112). The content of the VRAM 40 is backed up in the back-up memory 50 in order to stop the supply of power to the VRAM 40 which comprises a high power consuming dual port memory. Then, the supply of power to the display 63, the back light 65, the VRAM 40 and the CPU 10 is stopped (step 113). Since the supply of power to the CPU 10 is stopped, the CPU 10 stops. The content backed up in the back-up memory 50 in the step 112 is preserved by the supply of power from the power supply 80. When the power is turned on (step 114), the CPU 10 starts the processing from the reset status (step 115) and the content backed up in the back-up memory 50 in the step 112 is restored (step 116). In order to inform the completion of the restore to the VRAM 40 to a user, the buzzer generates a short sound twice (step 117). It is not limited to the short sound of two times and it may be one time or more than two times, or a longer sound. The information may be done by displaying a message on the display 63 or flashing an LED lamp (not shown). The combination with the buzzer 66 enhances the effect. The status of the CPU 10 is restored so that the application program 34 is executed from the next instruction to the power-off detection interruption 110 (step 118). In this manner, the execution of the application program 34 is continued (step 120).

In the present embodiment, the inform means is active when the time of instruction to the processing apparatus and the time of operation of the processing apparatus are not simultaneous. Namely, at the time of completion of the data processing when the power is turned off or at the time of start of the data processing when the power is turned on, the buzzer sound is generated, the lamp is flashed, the display is flashed or the message is displayed. By informing the status of the processing apparatus to the user, the user can exactly determine the timing to continue the operation. The effect of such inform means is great at various places when such means is installed small size portable equipments of the information processing apparatus.

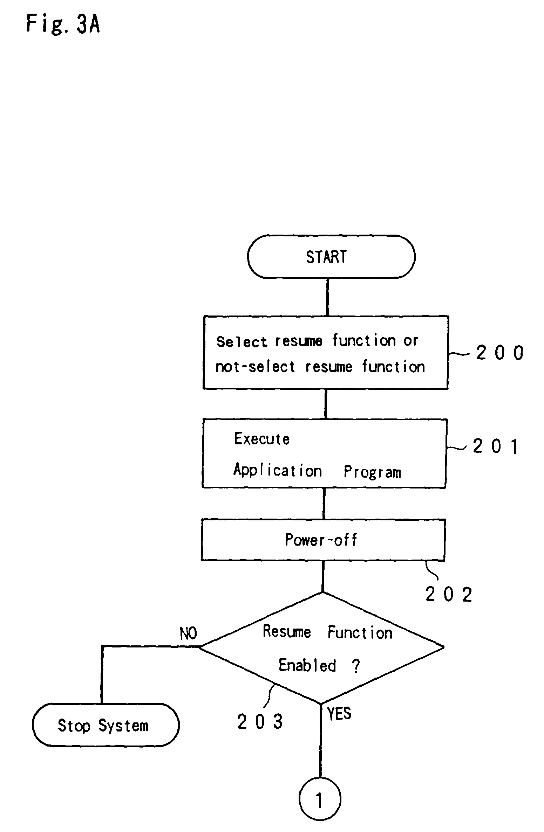

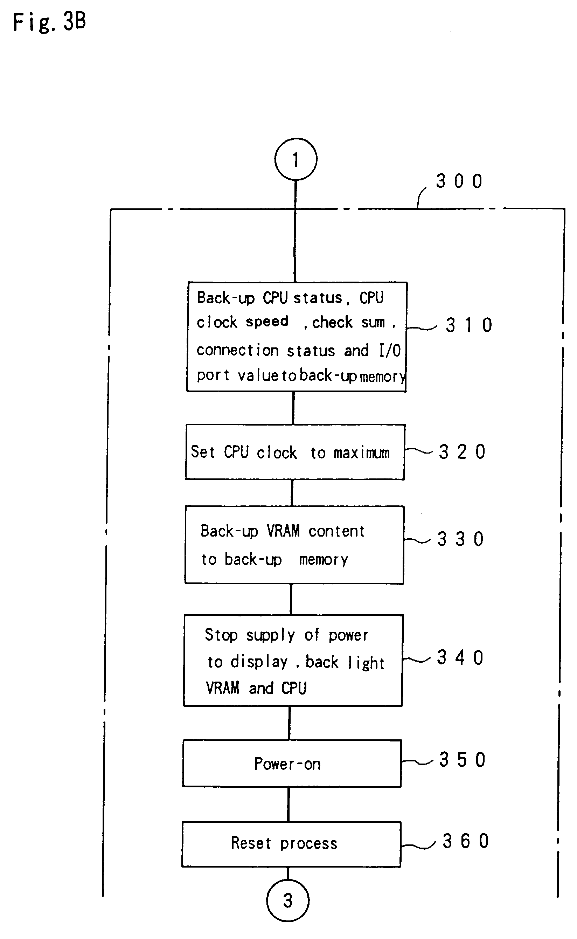

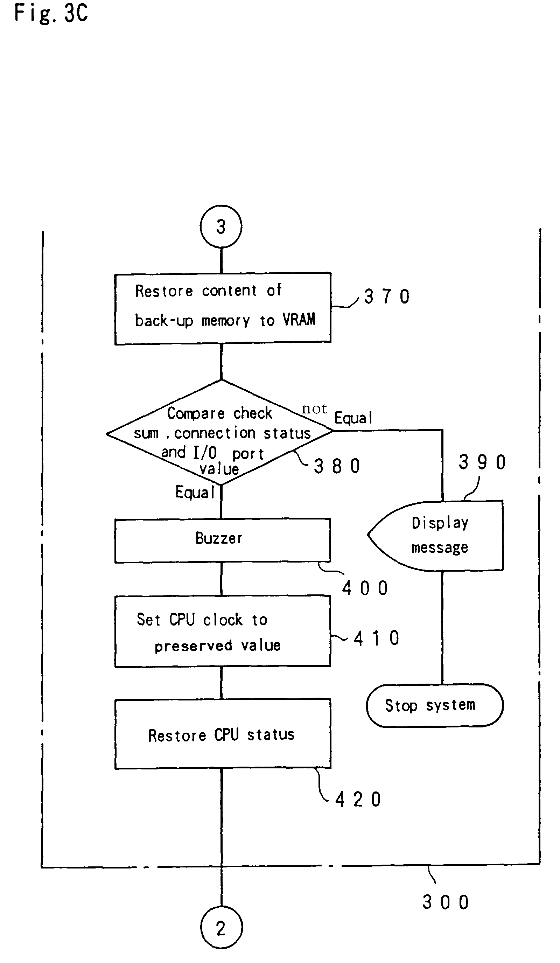

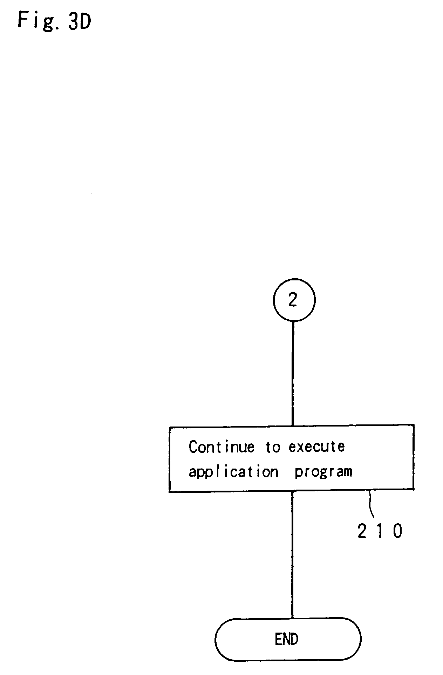

The data back-up/restore system of the present embodiment is explained with reference to a flow chart of Fig. 3A, 3B, 3C and 3D. In the present system, it is assumed that the resume function can be selected by a dip switch or a software switch. The resume function is enabled or disabled by the software switch (step 200). If the resume function is enabled, an interruption request is issued when the power is turned off. When the power is turned off (step 202) during the execution of the application program 34 (step 201), whether the resume function has been enabled in the step 200 or not is determined (step 203). If the resume function has been enabled, the power-off detection interruption request 110 is issued and the control is shifted to the power-off process. If the resume function has been disabled in the step 200, the system is stopped. When the power-off detection interruption request 300 is issued, the status of the CPU 10, the status of the CPU clock, the value of the check sum which is the system environmental status configuration, the connection status of the auxiliary memory 70 and the status information of the I/O ports are backed up in the back-up memory 50 (step 310). The CPU 10 instructs to the CPU clock switch 22 to switch the clock of the CPU 10 to a maximum clock, 16MHz (step 320). Then, the content of the VRAM 40 is backed up in the back-up memory (step 330). After the back-up, the supply of powers to the display 63, the back light 65, the VRAM 40 and the CPU 10 are stopped (step 340). The user stops to use the personal computer under this condition. Thereafter, when the user turns on the power to use the personal computer (step 350), the reset sequence is executed as a system initialization process (step 360). The reset sequence is primarily executed for the VRAM 40 and not for the main memory 30 in which the data is preserved after the turn-off of the system power. The content of the VRAM 40 backed up in the back-up memory 50 in the step 330 is restored to the VRAM 40 (step 370). The value of the check sum, the connection status of the auxiliary memory 70 and the status information of the I/O port which were backed up in the back-up memory in the step 310 are read and they are compared with the current status (step 380). If they are not equal in the comparison, a message is displayed on the display 63 (step 390) and the system is stopped. The message may be "Cannot resume. Depress reset key". The user is permitted to use the system without the resume function by depressing the reset key. If they are equal in the step 380, the buzzer is activated to inform to the user that the user can use the personal computer (step 400). Substantially simultaneously with the buzzer alarm, the CPU clock speed and the status of the CPU 10 are restored from the back-up memory 50 (steps 410 and 420). The power-off detection interruption sequence 300 is thus completed and the application program 34 is executed in a continuous manner (step 210).

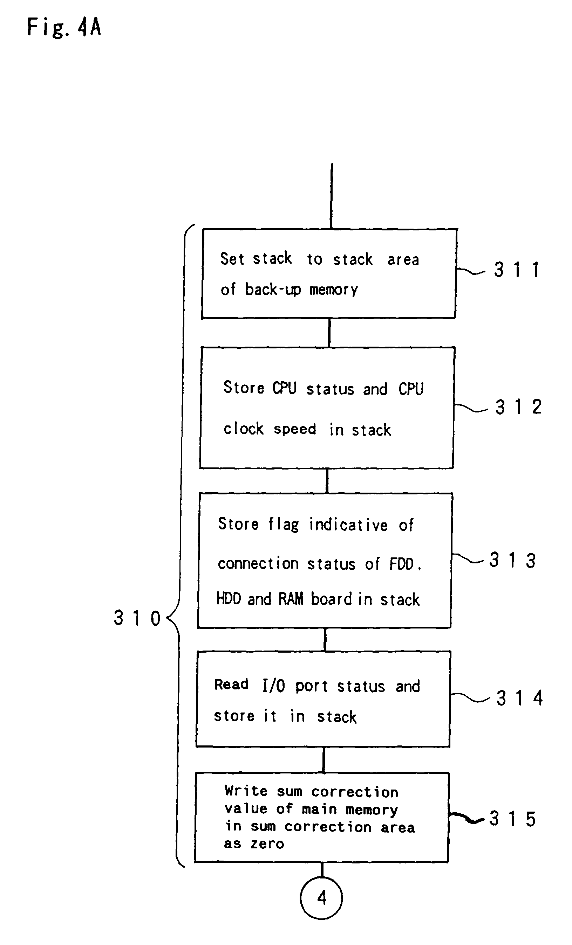

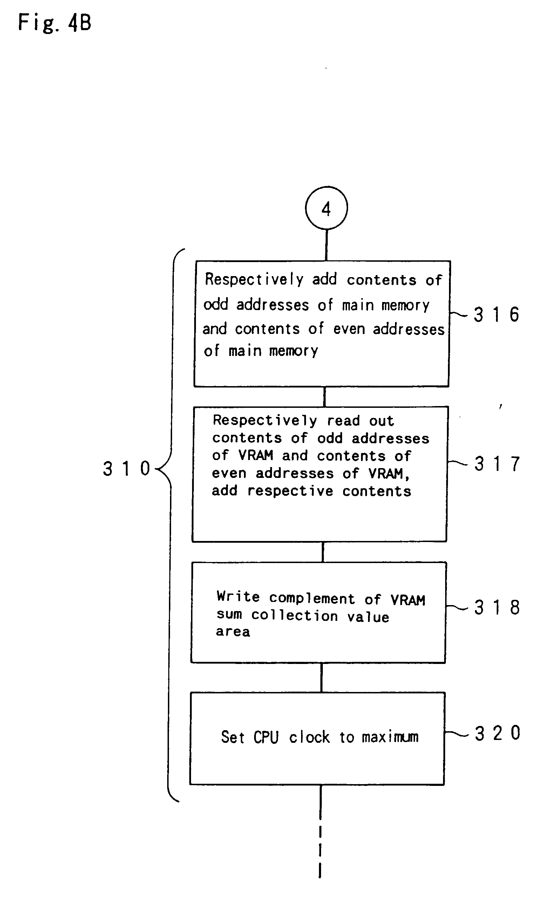

The back-up of the system environmental status configuration information which is the feature of the present embodiment is now explained with reference to Figs. 4A and 4B which show a flow chart of the step 310. A stack is set in the stack area 52 of the back-up memory 50 (step 311). The speed of the CPU 10 and the status information of the CPU clock are stored in the stock area 52 (step 312). Flags which indicate the connection status of the devices including the floppy disk drive 71, the hard disk drive 73 and the RAM board are read from the system management table 33 of the main memory 30 and they are stored in the stack area 51 (step 313). Those flags have been set in the system management table 33 at the time of previous power-on of the system power. Similarly, the status information of the I/O port is read and stored in the stack area 52 (step 314). The memory sum correction value area 51 of the back-up memory 50 is initialized to "O" (step 315). The sum of the contents of the main memory 30 and the VRAM 40 produced by the check sum, which is one of error detection method, is stored in the stack area 52 (steps 316 and 317). Specifically, the contents of address 0 and even addresses of the memory are sequentially added. Similarly, the contents of address 1 and odd addresses are sequentially added. Low order one byte of each of the sums is stored in the stack area 52. A complement of the sum is stored in the memory sum correction valve area 51 (step 318). The reason for using the complement of the sum is for the comparisons of the system environment comparison information at the next power-on of the system power.

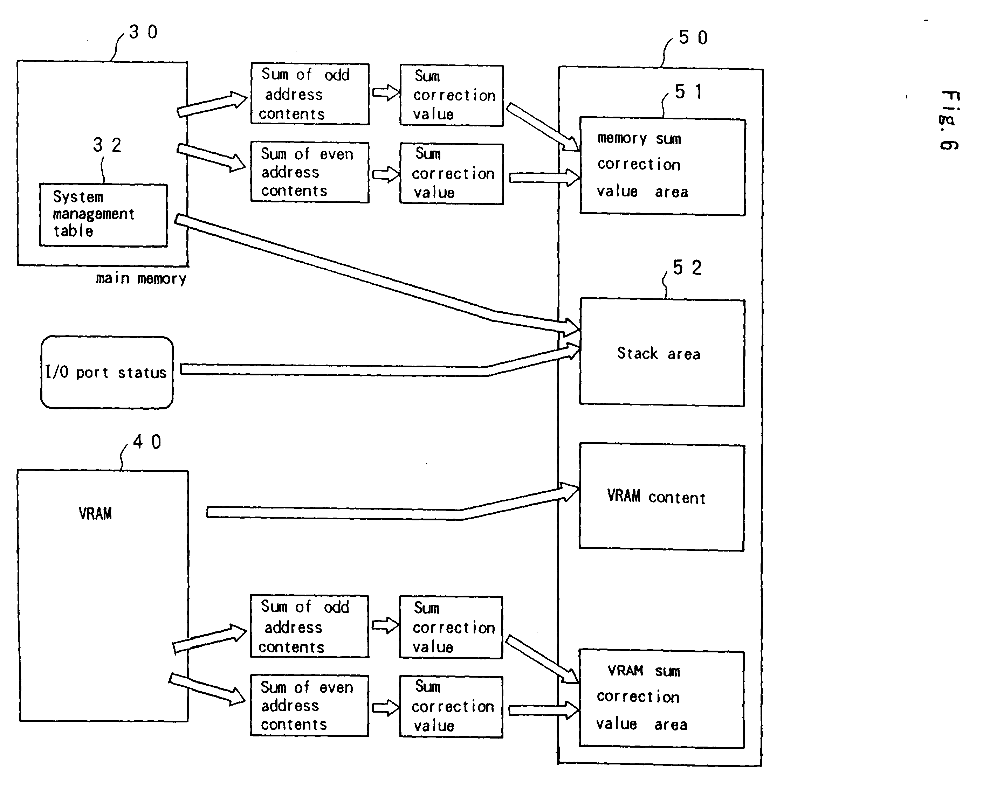

The back-up operation of the system environmental status configuration to the back-up memory 50 is summarized in Fig. 6. Complements of the sums of the odd address and the even addresses are backed up in the memory sum correction value area 51. The flag indicative of the connection status of the auxiliary memory 70 backed up in the system management table 33 and the status information of the I/O port are backed up in the stock area 52. The image data stored in the VRAM 40 is backed up in the back-up memory 50.

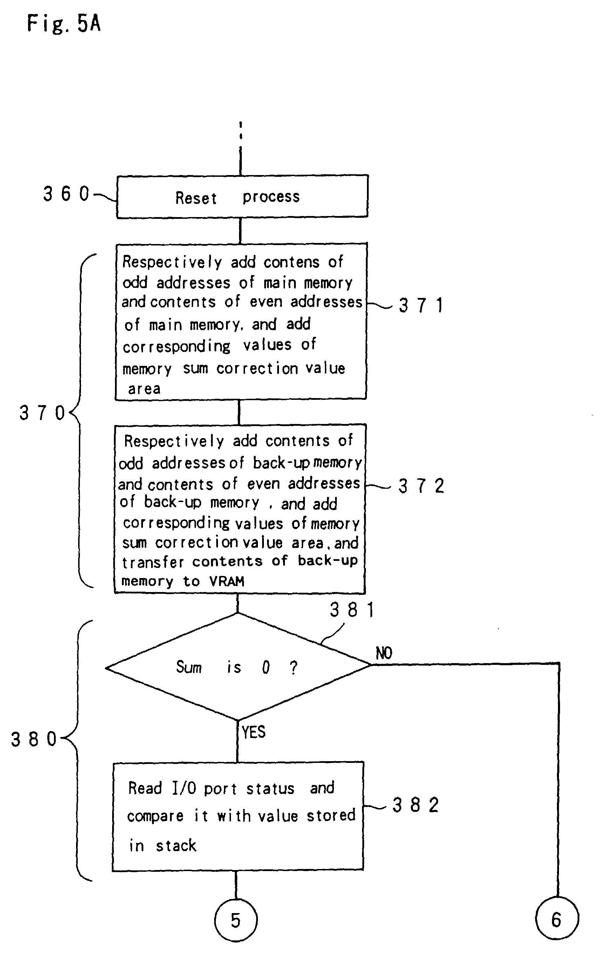

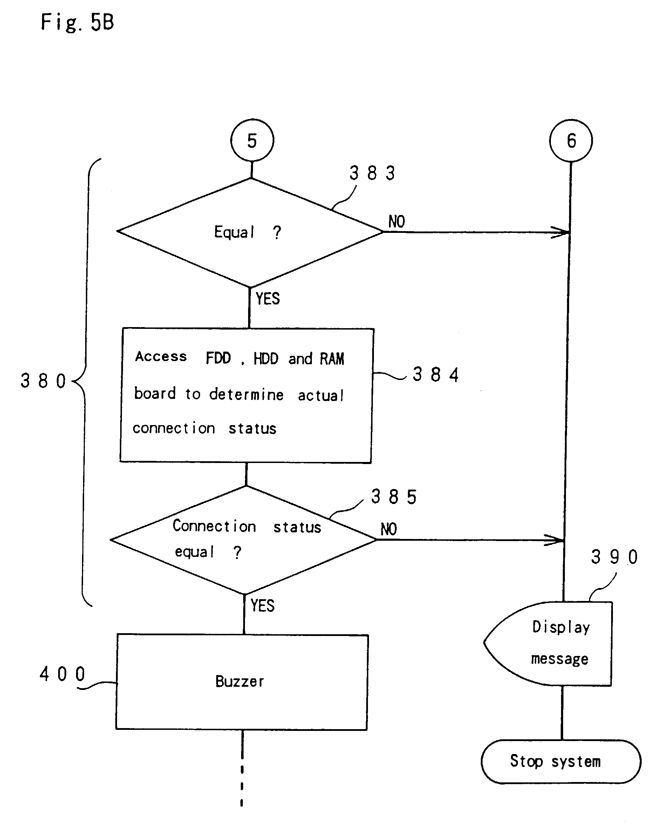

The restoring process of the system environmental status configuration which is executed after the power-on of the system power is explained with reference to Figs. 5A and 5B which show a flow chart of the step 370 and 380. The sum of the contents of odd address in the main memory 30 and contents of the even address in the main memory into the odd address sum and the even address sum, are calculated. The low order one byte of each of the sums is read. The complement data stored in the memory sum connection value area 51 of the back-up memory 50 is read and the complement data is added to the sum (step 371). If the content of the main memory 30 has not been destroyed from the system power-off to the next system power-on, the sum calculated in the step 316 at the time of system power-off and the sum in the step 371 are equal. Accordingly, if the content of the main memory 30 is correct, the addition of the complement data in the step 316 and the sum in the step 371 produces a sum "O". Similar calculation is mode for the image data of the VRAM 40 backed up in the back-up memory 50 (step 372) to determine whether the sum is "O" or not (step 381). Then, the status information of the I/O port is read and it is compared with the status information of the I/O port at the time of system power-off which is stored in the stack area 52 (steps 382 and 383). The devices such as the floppy disk drive 71, the hard disk drive 73 and the RAM board are actually operated to check the connection status (step 384). The result of the check is compared with the data relating to flag indicative of the connection status of the devices which is stored in the stock area 52(step 385). If the system environment is same that at the time of power-off through the comparison with the system environmental status configuration in the steps 381 to 385, the buzzer is activated to inform to the user that the system can be used (step 400). If they are not equal in the comparison, a message is displayed (step 390) and the system is stopped. The user is permitted to use the personal computer without using the resume function by depressing the reset key.

In the data back-up/restore system of the information processing apparatus of the present invention, the system environmental status configuration at the system power-off and the system environmental status configuration at the subsequent system power-on are computed to determine any change in the system status from the system power-off to the subsequent system power-on. By such determination, the user can exactly grasp the system status and can continuously use the information processing apparatus only when the system status has not changed.

From the invention thus described, it will be obvious that the invention may be varied in many ways. Such variations are not to be regarded as a departure from the scope of the invention, and all such modifications as would be obvious to one skilled in the art are intended to be included within the scope of the following claims.

## Claims

1. A data back-up/restore system of an information processing apparatus comprising:
- memory means (30) connected to control means (10) through a bus line (90);
- status back-up means (32c) for backing up the status of said control means (10) and the content of said memory means (30) at the time of power-off; and
- status restore means (32d) for restoring the status backed up by said status back-up means (32c) at the time of power-on to resume the data processing;
- said status back-up means (32c) being adapted to perform backing up (310) first environmental status configuration at the time of power-off by said status back-up means (32c);
**characterized in that**
- said status restore means (32d) comprises means for comparing (380) the first environmental status configuration at the time of power-off backed up by said status back-up means with a second environmental status configuration obtained when the power is turned on; and
- means for permitting the use of the apparatus by a user when the first environmental status configuration is identical to the second environmental status configuration.

2. A data back-up/restore system according to Claim 1, wherein the first environmental status configuration is error detection processing information for the data backed up by said status back-up means.

3. A data back-up/restore system according to Claim 1, wherein the first environmental status configuration is device connection status information.

4. A data back-up/restore system according to Claim 1, wherein the first environmental status configuration includes I/O port status information.

5. A data back-up/restore system according to Claim 1, wherein a processing speed of said control means from the back-up by said status back-up means to the restore by said status restore means is changed to a high speed irrespectively of a current speed.

6. A data back-up/restore system according to claim 1, further comprising inform means for informing the termination of the data restoring processing.

## Patentansprüche

1. Datensicherungs-/Wiederherstellungssystem einer Informationsverarbeitungsvorrichtung, mit:
- Speichereinrichtungen (30), die mit Steuereinrichtungen (10) über eine Busleitung (90) verbunden sind;
- Statussicherungseinrichtungen (32c) zum Sichern des Status der Steuereinrichtungen (10) und des Inhaltes der Speichereinrichtungen (30) zur Zeit einer Spannungsversorgungsabschaltung; und
- Statuswiederherstellungseinrichtungen (32d) zum Wiederherstellen des von den Statussicherungseinrichtungen (32c) gesicherten Status zur Zeit einer Spannungsversorgungseinschaltung, um die Datenverarbeitung wieder aufzunehmen;
- wobei die Statussicherungseinrichtungen (32c) angepaßt sind, eine Sicherung (310) einer ersten Umgebungsstatuskonfiguration zur Zeit einer Spannungsversorgungsabschaltung mittels der Statussicherungseinrichtungen (32c) durchzuführen;
dadurch **gekennzeichnet,** daß
- die Statuswiederherstellungseinrichtungen (32d) Einrichtungen zum Vergleichen (380) der ersten Umgebungsstatuskonfiguration zur Zeit der Spannungsversorgungsabschaltung, gesichert mittels der Statussicherungseinrichtung, mit einer zweiten Umgebungsstatuskonfiguration, die erhalten wird, wenn die Spannungsversorgung eingeschaltet wird, umfassen; und
- Einrichtungen zum Erlauben der Benutzung der Vorrichtung von einem Benutzer, wenn die erste Umgebungsstatuskonfiguration identisch mit der zweiten Umgebungsstatuskonfiguration ist.

2. Datensicherungs-/Wiederherstellungssystem nach Anspruch 1, dadurch gekennzeichnet, daß die erste Umgebungsstatuskonfiguration eine Fehlererfassungsverarbeitungsinformation für die von der Statussicherungseinrichtung gesicherten Daten ist.

3. Datensicherungs-/Wiederherstellungssystem nach Anspruch 1, dadurch gekennzeichnet, daß die erste Umgebungsstatuskonfiguration eine Gerätverbindungsstatusinformation ist.

4. Datensicherungs-/Wiederherstellungssystem nach Anspruch 1, dadurch gekennzeichnet, daß die erste Umgebungsstatuskonfiguration I/O-Port-Statusinformation einschließt.

5. Datensicherungs-/Wiederherstellungssystem nach Anspruch 1, dadurch gekennzeichnet, daß eine Verarbeitungsgeschwindigkeit der Steuereinrichtungen von der Sicherung durch die Statussicherungseinrichtungen bis zur Wiederherstellung durch die Statussicherungseinrichtungen auf eine hohe Geschwindigkeit geändert wird, unabhängig von einer gegenwärtigen Geschwindigkeit.

6. Datensicherungs-/Wiederherstellungssystem nach Anspruch 1, gekennzeichnet durch Informationseinrichtungen zum Mitteilen der Beendigung der Datenwiederherstellungsverarbeitung.

## Revendications

1. Système de sauvegarde/rétablissement de données d'un appareil de traitement de l'information comprenant :
- un moyen de mémoire (30) connecté à un moyen de commande (10) par l'intermédiaire de la ligne d'un bus (90);
- un moyen de sauvegarde d'état (32c) pour sauvegarder l'état dudit moyen de commande (10) et le contenu dudit moyen de mémoire (30) au moment de la mise hors-service de l'alimentation; et
- un moyen de rétablissement d'état (32d) pour rétablir l'état sauvegardé par ledit moyen de sauvegarde d'état (32c) au moment de la mise en service de l'alimentation afin de reprendre le traitement des données;
- ledit moyen de sauvegarde d'état (32c) étant destiné à exécuter la sauvegarde (310) d'une première configuration d'état de l'environnement à l'instant de la mise hors-service de l'alimentation par ledit moyen de sauvegarde d'état (32c);
caractérisé en ce que :
- ledit moyen de rétablissement d'état (32d) comprend un moyen pour comparer (380) la première configuration de l'état de l'environnement à l'instant de la mise hors-service de l'alimentation sauvegardée par ledit moyen de sauvegarde d'état à une seconde configuration d'état de l'environnement obtenue lorsque l'alimentation est mise en service; et
- un moyen pour permettre l'utilisation de l'appareil par un utilisateur lorsque la première configuration de l'état de l'environnement est identique à la seconde configuration de l'état de l'environnement.

2. Système de sauvegarde/rétablissement de données selon la revendication 1, dans lequel la première configuration de l'état de l'environnement est une information sur le traitement de la détection d'erreurs pour la donnée sauvegardée par ledit moyen de sauvegarde d'état.

3. Système de sauvegarde/rétablissement de données selon la revendication 1, dans lequel la première configuration de l'état de l'environnement est une information sur l'état de connexion du dispositif.

4. Système de sauvegarde/rétablissement de données selon la revendication 1, dans lequel la première configuration de l'état de l'environnement comprend une information sur l'état des points d'accès d'entrée/sortie.

5. Système de sauvegarde/rétablissement de données selon la revendication 1, dans lequel la vitesse de traitement dudit moyen de commande entre la sauvegarde par ledit moyen de sauvegarde d'état et le rétablissement par ledit moyen de rétablissement d'état est changée pour être une vitesse élevée quelle que soit la vitesse courante.

6. Système de sauvegarde/rétablissement de données selon la revendication 1, comprenant en outre un moyen d'information afin de signaler l'achèvement du traitement de rétablissement des données.
